# EUROPEAN PATENT APPLICATION

(11) **EP 1 939 068 A1**
(43) Date of publication of application: **02.07.2008**
(21) Application number: 07150145.6
(22) Date of filing: 19.12.2007
(51) Int. Cl.: B62D 5/04, F16H 55/06, F16H 55/18

(54) **Electric power steering apparatus and manufacturing method of pinion and/or gear**

(30) Priority: 27.12.2006 JP 2006352629
(71) Applicant: JTEKT CORPORATION, Chuo-ku Osaka-shi Osaka 542-8502 (JP)
(72) Inventor: Otsuki, Takumi, Osaka-shi, Osaka 542-8502 (JP)
(74) Representative: TBK-Patent

(57) **Abstract**

An electric power steering apparatus comprises an electric motor 2 assisting a steering torque of a driver, a pinion 3 attached to the electric motor 2 and a gear 4 engaging with the pinion 3. The gear 4 has a metal part 4 and a synthetic-resin part 42 which are piled up. Teeth 42a of the synthetic-resin part 42 are wider than teeth 41 a of the metal part 41 in direction of width of the teeth of the gear 4.

## Description

### BACKGROUND OF THE INVENTION

### 1. Field of the Invention

This invention relates to an electric power steering apparatus that assists a steering torque by a torque of an electric motor via a pinion and a gear, and also relates to a manufacturing method of the gear and/or the pinion for the same.

### 2. Discussion of the background

Japanese patent application publication No. 2003-327143, for example, discloses an electric power steering apparatus. The electric power steering apparatus detects a steering torque of a driver from a relative rotation between an input shaft connecting with a steering wheel and an output shaft connecting to the input shaft via a torsion bar, drives an electric motor according to the detected torque, and transmits the motor torque to the output shaft via a pinion and a gear, so as to assist the steering torque of the driver. The electric power steering apparatus has appropriate quantity of backlash between the pinion and the gear to reduce friction resistance therebetween so that the motor torque is transmitted efficiently and smoothly. The pinion and the gear are manufactured by cutting.

However because of the backlash of the engagement, reverse load is transmitted to the gear from the road through steering system, especially during driving on bumpy road. The gear is slightly rotated and is relatively moved to the pinion in the quantity of the backlash, so that tooth flanks of the gear collide with those of the pinion. The collision may make a noise offensive to the ear. On the other hand, during the motor assists the steering torque in one direction, if the driver reverses the steering wheel to the other direction, the motor follows the steering wheel (reverses to the other direction) but the relative rotational speed happens between the pinion and the gear instantaneously, thereby the pinion collides with the gear. Thus the noise offensive to the ear may happen and be introduced into a cabin of the vehicle. Larger quantity of the backlash is apt to make larger noise of the collision.

In one option to reduce such noise, grease with absorber may be applied. The grease includes many resin balls and is pasted on the pinion and the gear, so that the rein balls absorb the collision of the tooth flanks so as to reduce the noise of the collision. In such electric power steering apparatus, however, the resin balls gradually crashes with time and the number of the resin balls are reduced. Thus the grease reduces its advantage with time and improvement is required. Another option to reduce the noise needs higher machining accuracy and higher assembling accuracy of the pinion and the gear, and therefore improvement is also required in this view point.

### SUMMARY OF THE INVENTION

According to the invention, an electric power steering apparatus comprises an electric motor to assist a steering torque of a driver, a pinion attached to the electric motor and a gear engaging with the pinion. At least one of the pinion and the gear has a metal part and a flexible part which are piled up in direction of width of tooth flanks of the gear. Teeth of the flexible part are wider than teeth of the metal part in direction of width of the teeth of the gear.

According to the invention, a manufacturing method of a pinion and/or a gear comprises, a step providing a metal part blank and a synthetic-resin part blank, a step of providing an intermediate blank by piling up the metal part blank and the synthetic-resin part blank, a step of providing a gear blank by cutting a circumferential surface of the intermediate blank, and a step of performing hygroscopic treatment to the gear blank.

### BRIEF DESCRIPTION OF THE DRAWINGS

Various objects, features and many of the attendant advantages of the present invention will be readily appreciated as the same becomes better understood by reference to the following detailed description of the preferred embodiments when considered in connection with the accompanying drawings, in which:
Fig. 1 is a section view of an electric power steering apparatus of an embodiment related to the invention,
Fig. 2 is a partial perspective view of a gear of the electric power steering apparatus of the embodiment,
Fig. 3 is an enlarged front view of the gear of the embodiment,
Fig. 4 is an enlarged section view of the gear of the embodiment,
Fig. 5 is an explanatory drawing of an embodiment of a manufacturing method of the gear, and
Fig. 6 is a partial perspective view of the gear after cutting of the embodiment.

### DESCRIPTION OF THE PREFERRED EMBODIMENTS

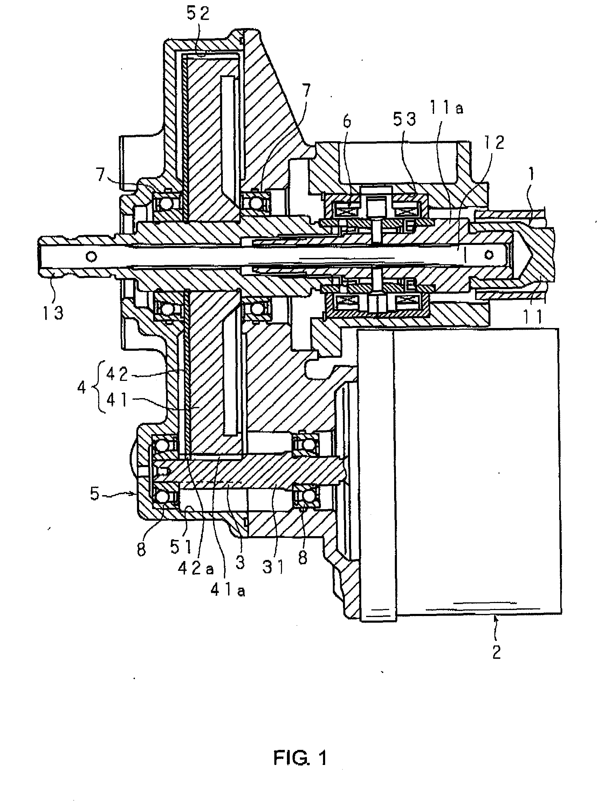

An embodiment of an electric power steering apparatus related to the present invention will be described with reference to Figs. 1 to 4. Fig. 1 shows a section view of the embodiment of the electric power steering apparatus. The electric power steering apparatus is connected to a steering wheel and a pair of front wheels of a vehicle. The electric power steering apparatus comprises a steering shaft 1, an electric motor 2 assisting a steering torque of a driver, a pinion 3 attached to the electric motor 2, a gear 4 engaging with the pinion 3, a housing 5 supporting the pinion 3 and the gear 4 rotatably, and a torque sensor 6 detecting the steering torque. The electric motor 2 is driven based on the detected steering torque. The torque of the electric motor 2 is transmitted to the steering shaft 1 through the pinion 3 and the gear 4 so as to assist the steering torque of the driver.

The steering shaft 1 comprises an input shaft 11 connected to the steering wheel, an output shaft 13 connected to the front wheels via a universal joint and a rack and pinion mechanism, and a torsion bar 12 connected with the input shaft 11 and the output shaft 13 inbetween. The steering torque of the driver is transmitted from the input shaft 11 to the output shaft 13 via the torsion bar 12 twisting. The input shaft 11 has a cylinder part 11a where one end of the torsion bar 12 is inserted into. The output shaft 13 is cylindrical so that the other end of the torsion bar 12 and the end of the cylinder part 11a are inserted into the output shaft 13. The torque sensor 6 surrounds the output shaft 13 and the cylinder part 11a. The gear 4 is fitted at the outside of the output shaft 13. Bearings 7 and 7 are also fitted at the outside of the output shaft 13 to sandwich the gear 4.

The pinion 3 and the gear 4 are helical gears and have appropriate backlash in their engagement so as to have high transmission. The pinion 3 has a shaft portion 31 and is arranged parallel to the output shaft 13. Bearings 8 and 8 are fitted outside of the shaft portion 31 at the both ends in order to support the pinion 3. The pinion 3 is made from a metal bar by cutting.

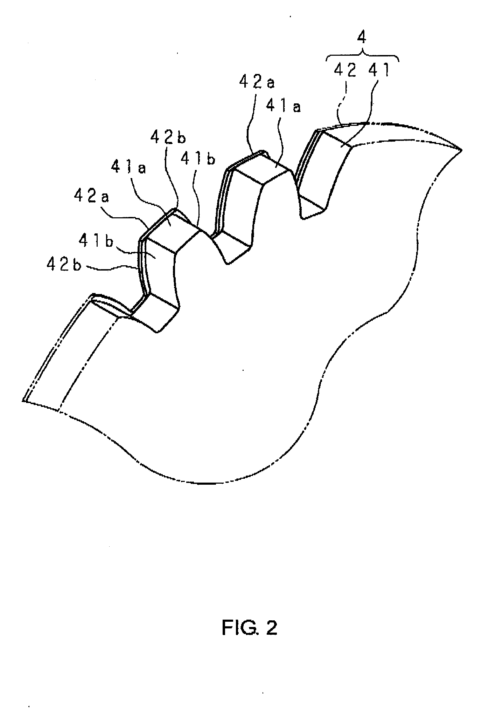

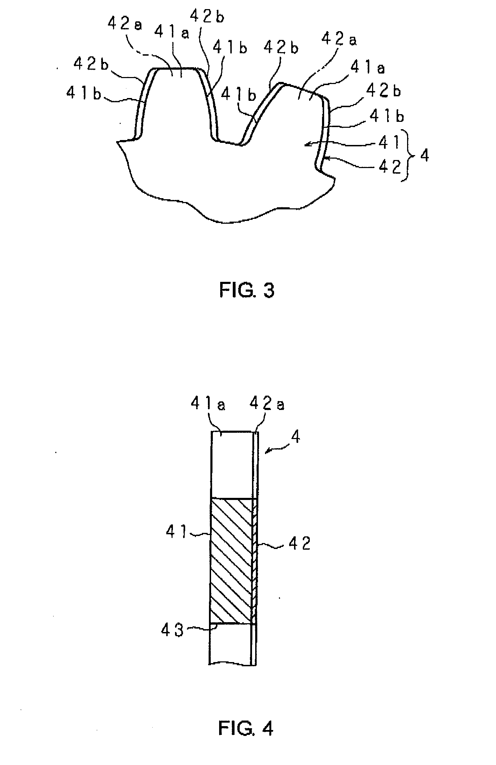

Fig. 2 is a partial perspective view of the gear 4, Fig. 3 is an enlarged front view of the gear 4, and Fig. 4 is an enlarged section view of the gear 4. The gear 4 comprises a metal part 41 which has plural teeth 41a on its circumference, and a synthetic-resin part 42 which is pasted on one side of the metal part 41 and plural teeth 42a corresponding to the teeth 41 a. However, respective widths in rotational direction of the teeth 42a of the synthetic-resin part 42 are wider than those of the teeth 41a of the metal part 41. The metal part 41 and the synthetic-resin part 42 have holes 43 where the output shaft 13 is fitted into. The synthetic-resin part 42 is flexible. The metal part 41 is an iron disk which has a width in axial direction about nine times larger than the synthetic-resin part 42. The synthetic-resin part 42 is a relatively thin synthetic-resin plate which is pasted on one end of the metal part 41 with glue so as to be combined with the metal part 41. Hygroscopic treatment takes place for the combination of the metal part 41 and the synthetic-resin part 42 in high humidity. The hygroscopic treatment makes cubic volume of the synthetic-resin part 42 larger in micron scale. Thus respective widths in rotational direction of the teeth 42a become larger than those of the teeth 41a in micron scale. Namely, flanks 42b of teeth 42a protrude from flanks 41b of the teeth 41a to both sides, so as to be flexible when the teeth of the pinion 3 collide with the teeth 42a. The synthetic-resin part 42 is made from the synthetic-resin plate which is able to keep hygroscopic condition so as to keep the expanded volume by hygroscopic treatment.

The housing 5 has a first room 51 which holds the pinion 3, a second room 52 which connects with the first room 51 and holds the gear 4 and the output shaft 13, and a third room 53 which connects with the second room 52 and holds the torque sensor 6. The first room 51 has an opening end where the electric motor 2 is detachably fixed.

When the driver steers the steering wheel, the input shaft 11 rotates to one of rotational directions and the torque sensor 6 detects the input torque. Because the electric motor 2 is driven according to the detected torque of the torque sensor 6 and the motor torque is transmitted to the output shaft 13 through the pinion 3 and the gear 4, the electric power steering assists the steering torque of the driver. During the assistance, the tooth flanks of the pinion 3 contacts with those of the gear 4 without the noise of collision.

When the driver reverses the steering direction, the electric motor 2 and the pinion 3 also reverse the rotational direction in order to assist the steering torque. Because the gear 4 has the tooth flanks 42b of the synthetic-resin part 42 overhanging from the tooth flanks 41b of the metal part 41, small is the backlash between the teeth of the pinion 3 and those of the gear 4. As soon as the pinion 3 reverses, the tooth flanks of the pinion 3 contact with the tooth flanks 42b of the synthetic-resin part 42 of the gear 4. Thus the tooth flanks 42b of the synthetic-resin part 42 are elastically deformed, namely the synthetic-resin part 42 resists reverse rotation of the pinion 3. Then, the tooth flanks of the pinion 3 contact with the tooth flanks 41b of the metal part 41 so that the motor torque is transmitted to the gear 4 through the pinion 3. Therefore the reverse rotation of the pinion 3 is absorbed by the teeth 42a of the synthetic-resin part 42, the collision noise is reduced.

On the other hand, when the reverse load is inputted from the road, the load rotates the wheels and the output shaft 13. The gear 4 slightly rotates relative to the pinion 3 so that the tooth flanks 42b of the synthetic-resin part 42 of the gear 4 contact with the tooth flanks of the pinion 3. Thus the tooth flanks 42b of the synthetic-resin part 42 are elastically deformed, namely the synthetic-resin part 42 resists slight rotation of the gear 4, Therefore the slight rotation of the gear 4 is absorbed by the teeth 42a of the synthetic-resin part 42, the collision noise is reduced.

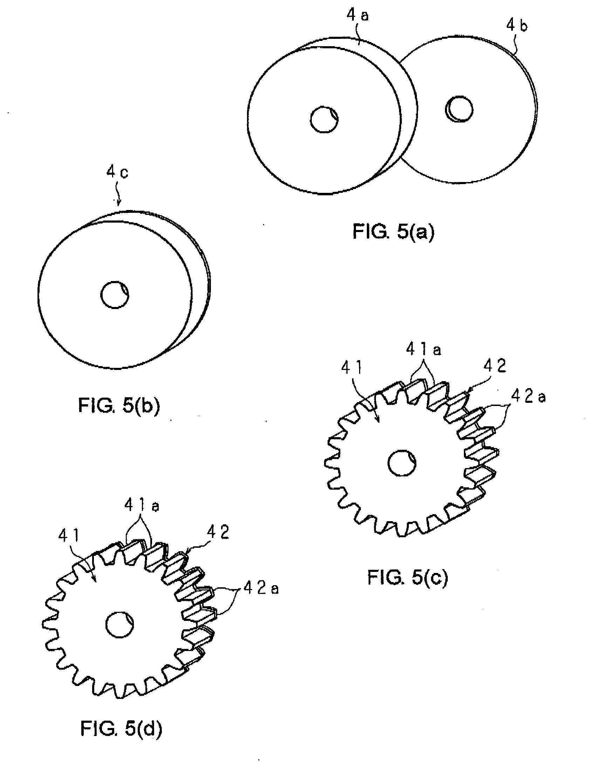

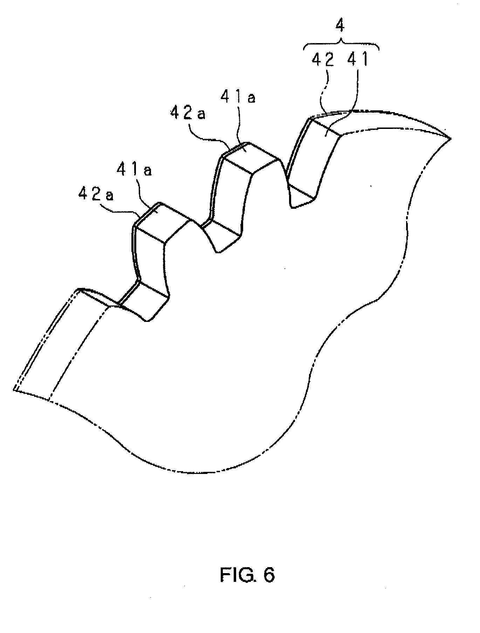

An embodiment of a manufacturing method of a pinion and/or a gear for an electric power steering apparatus related to the present invention will be described with reference to Figs. 5(a) to 5(d). Fig. 6 shows a partial perspective view of the gear after cutting.

There are provided a metal part blank 4a and a synthetic-resin part blank 4b. The metal part blank 4a is a disk which has a circumferential surface, as shown in Fig. 5(a). The synthetic-resin part blank 4b is a disk which has a circumferential surface, whose diameter is substantially as long as that of the metal part blank 4a and whose width is thinner, specifically about one ninth width, than that of the metal part blank 4a. Next, an intermediate blank 4c is made by gluing the synthetic-resin part blank 4b onto the metal part blank 4a (see Fig. 5(b)). The circumferential surface of the intermediate blank 4c is cut to a helical gear by a gear cutting machine, and then the intermediate blank 4c becomes a gear blank which has the metal part 41 and the synthetic-resin part 42 (see Fig. 5(c), Fig. 4 and Fig. 6). Next, the gear blank with the metal part 41 and the synthetic-resin part 42 is set into hygroscopic atmosphere in order to perform the hygroscopic treatment to the synthetic-resin part 42. Because of the hygroscopic treatment, the cubic volume of the synthetic-resin part 42 is increased in micron scale so that the teeth 42a of the synthetic-resin part 42 become wider than the teeth 41 a of the metal part 41a in micron scale (see Fig. 5(d), Fig. 2 and Fig. 3). Thus respective tooth flanks 42b of the synthetic-resin part 42 overhang from the tooth flanks 41 a of the metal part 41 (see Fig. 3). By the way, if the hygroscopic treatment takes place in higher humid and higher thermal atmosphere, the synthetic-resin part 42 becomes more hygroscopic so that the hygroscopic treatment time becomes shorter. The synthetic-resin part blank 4b is a synthetic-resin plate which is able to keep hygroscopic condition and to keep the expanded cubic volume by the hygroscopic treatment.

Such gear 4 is easily manufactured and its manufacturing cost is low. In addition, overhanging tooth flanks 42b of the synthetic-resin part 42 make the backlash smaller. And wide tooth flanks 41b of metal part 41 make the gear 4 durable, because the tooth flanks 41b are loaded by rotational torque.

In the above described embodiments, although the gear has the synthetic-resin part 42 glued on one side of the metal part 41, the gear may have a pair of synthetic-resin parts 42 on both sides of the metal part 41 or may have a pair of metal parts 41 sandwiching the synthetic-resin part 42. Or, the gear 4 may have plural metal parts 41 and synthetic-resin parts 42 which are alternately piled up. Further, although the embodiment of manufacturing method describes that the gear 4 is cut after gluing the synthetic-resin part blank 4b onto the metal part blank 4a, the both blanks 4a and 4b may be glued together after gear cutting of each blank. Moreover, in the embodiments, although synthetic-resin is explained as the flexible teeth, synthetic-rubber may be used for the flexible teeth. The flexible teeth may be placed only on the teeth 41a of the metal part 41. Furthermore, in the embodiments, although the gear 4 has the metal part 41 and the synthetic-resin part 42, the pinion may have the metal part and the synthetic-resin part. The pinion 3 and the gear 4 are helical gears in the embodiments, but they may be spur gears or worm and worm wheel.

Although the electric power steering of the embodiment is a column assist type and has the electric motor 2 attached to the lower end of column housing as shown in Fig. 1. However the electric power steering may be rack assist type where the electric motor is attached on rack housing in parallel and the pinion and the gear are interposed between the motor and a rack shaft.

The gear manufactured by the invention may be used for the other apparatus than for the electric power steering.

Obviously, numerous modifications and variations of the present invention are possible in light of the above teachings. It is thereby to be understood that within the scope of the appended claims, the present invention may be practiced otherwise than as specifically described herein.

An electric power steering apparatus comprises an electric motor 2 assisting a steering torque of a driver, a pinion 3 attached to the electric motor 2 and a gear 4 engaging with the pinion 3. The gear 4 has a metal part 41 and a synthetic-resin part 42 which are piled up. Teeth 42a of the synthetic-resin part 42 are wider than teeth 41 a of the metal part 41 in direction of width of the teeth of the gear 4.

## Claims

1. An electric power steering apparatus comprising an electric motor assisting a steering torque of a driver, a pinion attached to the electric motor and a gear engaging with the pinion:
wherein at least one of the pinion and the gear has a metal part and a flexible part which are piled up in direction of width of tooth flanks of the pinion and/or the gear, and
wherein teeth of the flexible part are wider than teeth of the metal part in direction of width of the teeth of the pinion and/or the gear.

2. The electric, power steering apparatus according to claim 1, wherein:
the flexible part is a synthetic-resin whose cubic volume is expanded by hygroscopic treatment.

3. The electric power steering apparatus according to claim 1, wherein:
the teeth of the flexible part overhang from the teeth of the metal part in both direction.

4. A manufacturing method of a gear and/or pinion, comprising steps of:
providing a metal part blank and a synthetic-resin part blank;
providing an intermediate blank by piling up the metal part blank and the synthetic-resin part blank;
providing a gear blank by cutting a circumferential surface of the intermediate blank so that the gear blank has teeth of a metal part and a synthetic- resin part; and
performing hygroscopic treatment to the gear blank so that the teeth of the synthetic-resin part overhang from the teeth of the metal part.
